# FASCICULE DE BREVET EUROPEEN

(11) **EP 0 484 191 B1**
(45) Date de publication et mention de la délivrance du brevet: **07.12.1994**
(21) Numéro de dépôt: 91402459.1
(22) Date de dépôt: 17.09.1991
(51) Int. Cl.: F16D 65/56

(54) **Moteur de frein à réglage automatique**
Selbstnachstellender Bremsmotor
Self-adjusting brake actuator

(30) Priorité: 30.10.1990 FR 9013434
(43) Date de publication de la demande: 06.05.1992
(73) Titulaire: ALLIEDSIGNAL EUROPE SERVICES TECHNIQUES, 93700 Drancy (FR)
(72) Inventeur: Courbot, Pierre, BENDIX EUROPE Services Techniques, F-93700 Drancy (FR)
(74) Mandataire: Bentz, Jean-Paul

(56) Documents cités:
- EP-A- 0 128 081
- FR-A- 1 447 464
- FR-A- 1 470 078

## Description

L'invention se rapporte à un moteur de frein susceptible de mettre en oeuvre un frein notamment destiné à équiper un véhicule automobile.

L'invention concerne en particulier un moteur de frein à réglage automatique destiné à compenser automatiquement l'usure des garnitures de friction afin de maintenir la course de la pédale de frein et de la commande mécanique si le frein en est équipé, nécessaire à la mise en oeuvre de ce dernier, à un niveau sensiblement constant et faible.

On connaît de nombreux moteurs de frein équipés de dispositifs à réglage automatique, par exemple celui décrit dans le brevet français No. 1 447 464. Néanmoins, ce moteur de frein présente certains inconvénients en particulier le nombre et la complexité des pièces qui rendent ce moteur de frein ou plus précisément le réglage automatique fragile et d'une fiabilité insuffisante compte tenu des durées et des conditions d'utilisation, le tout assorti d'un démontage et remontage délicats lors des périodes d'entretien.

On connaît également, du document EP-A-0 128 081, un moteur de frein conforme au préambule de la revendication principale, dans lequel le pivot formant rotule pour le cliquet commandant l'allongement du système vis-écrou comporte une saillie pénétrant dans une gorge annulaire formée sur l'écrou. Une telle disposition présente cependant l'inconvénient de libérer axialement l'écrou du piston, lorsque le pivot est démonté pour des opérations d'entretien du moteur de frein. L'écrou peut alors se désolidariser du piston, et son remontage peut être tel que le dispositif de réglage fonctionne anormalement, ou ne fonctionne pas du tout.

L'invention a donc pour but un moteur de frein à réglage automatique de construction simple, de fiabilité accrue et d'entretien facile.

Dans ce but, l'invention propose un moteur de frein à réglage automatique du type comprenant un système à vis-écrou dont l'allongement est commandé par un dispositif à roue dentée et cliquet sensible au déplacement axial relatif entre un piston de commande et un corps fixe recevant le piston, le cliquet étant associé au piston au moyen d'un pivot formant rotule solidaire du piston, par l'intermédiaire d'un perçage caractérisé en ce que l'écrou comporte une gorge définissant un volume annulaire dans lequel est introduite au moins une bille, pour interdire l'extraction de l'écrou hors du piston lors des opérations d'entretien du moteur de frein.

On décrira maintenant à titre d'exemple non limitatif un mode de réalisation de l'invention en se référant aux dessins annexés dans lesquels :
- La Figure 1 est une vue en coupe partielle d'un moteur de frein illustrant la technique de l'art antérieur,
- La Figure 2 est une vue en coupe partielle du piston du moteur de frein réalisé conformément à l'invention,
- La Figure 3 est une vue en coupe à plus grande échelle d'un détail de la Figure 2,
- La Figure 4 est une vue similaire à la Figure 3 montrant une variante du mode de réalisation de l'invention, et
- La Figure 5 est une vue en coupe selon la ligne V - V de la Figure 4.

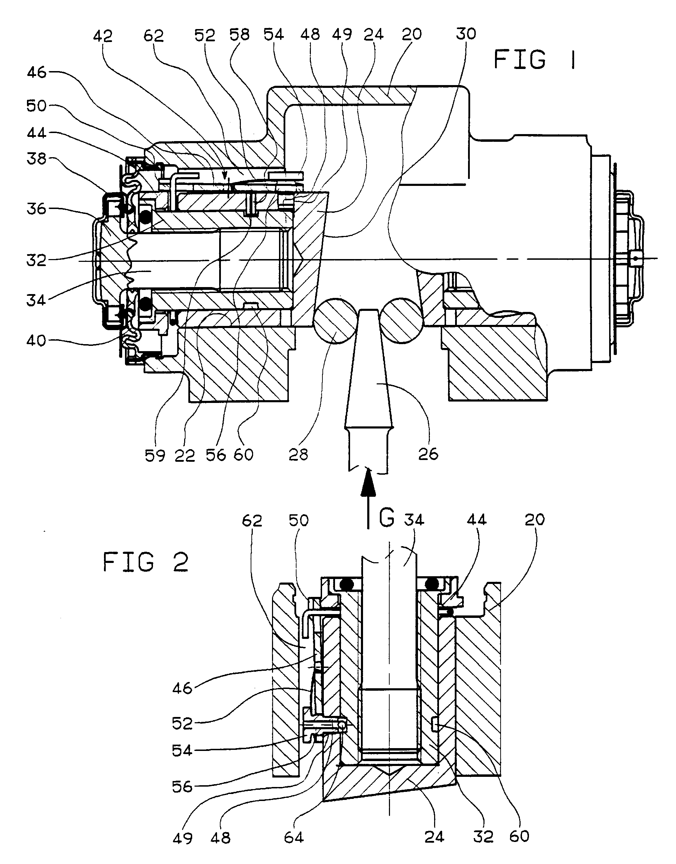

Le moteur de frein représenté sur la Figure 1 est du type à commande à coin utilisé en particulier dans les freins à tambour. Ce moteur de frein comporte d'une façon conventionnelle, un corps 20 comportant deux alésages 22 dans lesquels sont montés des pistons 24 susceptibles d'être écartés l'un de l'autre au moyen d'un coin 26 et de galets 28 agissant sur les fonds inclinés 30 des pistons 24 lorsque le coin 26 est déplacé dans le sens de la flèche G de la Figure 1. Les pistons 24 par l'intermédiaire d'écrous 32 et de vis 34 sont susceptibles d'écarter les segments de frein à tambour (non représentés) mettant ainsi le frein en oeuvre. D'une façon conventionnelle, l'extrémité 36 de la vis 34 comporte un dispositif 38 empêchant la rotation de la vis par rapport au segment lors du fonctionnement du frein mais autorisant par rotation manuelle de la vis 34 de visser ou dévisser celle-ci. Egalement d'une façon conventionnelle, l'extrémité de l'alésage 22 est équipée d'un dispositif de protection 40 placé entre le corps 20 du moteur de frein et la vis 34 de manière à protéger l'intérieur du moteur de frein.

Le moteur de frein comporte un dispositif de réglage automatique désigné dans son ensemble par la référence 42. En se référant à la Figure 1, il apparaît que le réglage automatique 42 est formé d'une part par la vis 34 et l'écrou 32, et d'autre part par un rochet 44 associé à l'écrou 32 et commandé par un cliquet 46 associé axialement au piston 24 au moyen d'un pivot 48.

Le cliquet 46 formé par une plaque sensiblement plane comporte une première extrémité associée au pivot 48 de manière à ce que le cliquet suive les déplacements axiaux du piston 24, le pivot 48 étant fixé rigidement au piston 24 dans un perçage 49.

L'autre extrémité du cliquet 46 comporte une portion repliée 50 de forme conjuguée à la denture de la roue dentée 44. Cette portion repliée 50 est appliquée élastiquement sur la denture au moyen d'un ressort 52 placé sous une tête 54 du pivot 48 et agissant radialement sur le cliquet 46. Le pivot 48 comporte une portion 56 en forme de portion de sphère et formant rotule permettant au cliquet 46 de basculer autour de cette portion 56 à l'encontre du ressort 52.

On voit également sur la Figure 1 qu'une ouverture 58 est pratiquée dans le piston 24 de manière à y introduire une goupille 59 formant une saillie à l'intérieur du piston et pénétrant dans une gorge 60 formée dans l'écrou 32 de manière à limiter les mouvements axiaux de l'écrou 32 par rapport au piston 24, et de maintenir en place l'ensemble écrou 32 - rochet 44 à l'intérieur du piston 24 pendant les interventions éventuelles sur le réglage automatique, tout en permettant la rotation de l'écrou 32 par rapport au piston 24.

La tête 54 du pivot 48 est montée dans une rainure 62 formée dans le corps 20 du moteur de frein, le diamètre de la tête 54 étant tel que le piston 24 et le pivot 48 sont circonférentiellement positionnés par rapport au corps 20 dans lequel ils sont susceptibles de se déplacer ensemble axialement du fait de cette rainure 62.

Le frein qui vient d'être décrit fonctionne de la manière suivante :lorsque le moteur de frein doit être actionné, une poussée est exercée sur le coin 26 dans le sens de la flèche G de la Figure 1. Sous l'effet de cette poussée, le coin pénètre entre les deux galets 28 qui roulent d'une part sur le coin 26 et d'autre part sur les fonds 30 des pistons 24, et comme le coin et les fonds 30 sont inclinés, les pistons 24 sont écartés l'un de l'autre de manière à solliciter les segments de frein (non représentés). Le piston 24 représenté sur la partie gauche de la Figure 1 se déplace donc vers la gauche au moment de l'actionnement du frein. Ce mouvement du piston entraîne l'ensemble du réglage automatique comprenant entre autre l'écrou, la vis et le cliquet grâce au pivot 48. Le déplacement du pivot 48 entraîne le mouvement du cliquet 46, le rochet 44 se déplaçant également sous la poussée du piston 24, le déplacement de l'extrémité libre du cliquet 46 par rapport à la denture du rochet 44 étant assuré par une rampe du cliquet 46 prenant appui sur un axe fixe solidaire du support 20 lors de l'avance du piston correspondant. Si la progression axiale du piston 24 est suffisante, la portion 50 du cliquet 46 saute une dent du rochet 44 et effectue le réglage au retour.

Si la course axiale des pistons est insuffisante pour donner au cliquet le débattement nécessaire pour passer une dent, celui-ci revient à sa position initiale sans effectuer le réglage.

Il apparaît ainsi au vue de la Figure 1 que l'ensemble du réglage automatique 42 est solidaire du piston 24 et peut être aisément démonté du moteur de frein par simple extraction du piston sans aucun démontage ni intervention à l'exception de la dépose du dispositif de protection 40. Ce sous-ensemble démontable en bloc permet un entretien facile si nécessaire du dispositif de réglage. Cependant, au cours de cette opération, il arrive que la goupille 59 quitte son logement 58. Il s'ensuit alors une désolidarisation de l'écrou 32 et du piston 24 qui peut résulter en un remontage inadéquat de l'ensemble et un fonctionnement anormal ou inexistant du dispositif de réglage.

Cet inconvénient est évité grâce à l'invention dont le mode de réalisation va maintenant être exposé en référence aux Figures 2 à 5.

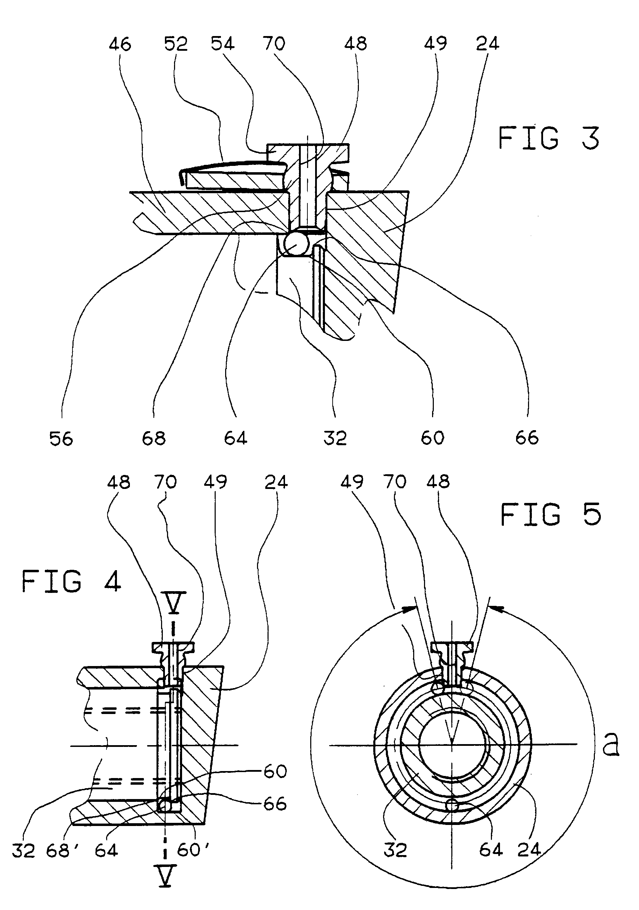

Les Figures 2 et 3 représentent à plus grande échelle le piston du moteur de frein de la Figure 1, où les mêmes éléments portent les mêmes numéros de référence. On voit que conformément à l'invention, la gorge 60 est formée sur l'écrou 32 au droit du perçage 49 prévu pour le montage du pivot 48 lorsque le moteur de frein est assemblé.

Avant le montage du pivot 48, une bille 64 est introduite dans le perçage 49 de façon à ce qu'elle pénètre dans la gorge 60. De cette façon, la bille travaillant en cisaillement entre le bord 66 de la gorge 60 et le bord 68 du perçage 49 interdira l'extraction de l'écrou 32 hors du piston 24 lors des opérations d'entretien. Par contre, en fonctionnement normal, la rotation de l'écrou 32 par rapport au piston 24 est totalement libre, la bille 64 étant maintenue en place par l'extrémité du pivot 48.

Selon une caractéristique avantageuse de l'invention, un perçage 70 est pratiqué dans le pivot 48, mettant ainsi le volume délimité par la gorge 60 en communication avec l'atmosphère extérieure. Cette mise à l'air libre a pour but d'éviter la compression de l'air au moment du montage de la vis 34 dans l'écrou 32. En effet, pour assurer un bon fonctionnement de l'ensemble, les filets de la vis 34 et de l'écrou 32 sont lubrifiés par de la graisse, ainsi que l'alésage du piston 24 dans lequel tourne l'écrou 32. Il s'ensuit donc une étanchéité à l'air, préjudiciable à un montage ou un démontage facile de l'ensemble. Cet inconvénient se trouve donc éliminé grâce au passage 70 pratiqué dans le pivot 48.

On a représenté sur les Figures 4 et 5 une variante du mode de réalisation des Figures 2 et 3, où les mêmes éléments portent les mêmes numéros de référence. On voit sur la Figure 4 qu'une gorge 60' a été ménagée à l'intérieur de l'alésage du piston 24, au droit du perçage 49 prévu pour le pivot 48, et donc en face de la gorge 60 formée sur l'écrou 32 lorsque celui-ci est dans sa position de fonctionnement. Une ou plusieurs billes 64 peuvent donc être introduites dans le perçage 49 pour venir se loger dans le volume annulaire délimité par les gorges 60 et 60′sur un angle a. Comme dans le mode de réalisation précédent, la ou les billes 64 empêchent la séparation de l'écrou 32 et du piston 24, en travaillant en cisaillement entre le bord 66 de la gorge 60 de l'écrou 32 et le bord 68′ de la gorge 60′ du piston 24.

Le pivot 48 peut pénétrer plus ou moins dans la gorge 60′ et dans la gorge 60, auquel cas la ou les billes 64 ne pourront se déplacer que sur une partie du volume délimité par les gorges 60 et 60′ sur un angle a, comme représenté sur les Figures 4 et 5. Le pivot 48 peut également ne pas pénétrer dans la gorge 60′, comme dans le cas de la Figure 3, auquel cas où les billes 64 pourront se déplacer dans la totalité du volume défini par les gorges 60 et 60′, volume qui est comme précédemment relié à l'atmosphère au moyen du perçage 70 pratiqué dans le pivot 48.

On a ainsi réalisé conformément à l'invention un moteur de frein à réglage automatique de construction simple et fiable, d'entretien facile, et dont l'écrou reste solidaire du piston lors des périodes de montage et de démontage.

L'invention qui vient d'être décrite à l'aide des deux modes de réalisation précédents n'y est évidemment pas limitée, mais est au contraire susceptible de recevoir de nombreuses modifications. C'est ainsi par exemple qu'elle trouvera également application dans un moteur de frein à tambour à commande hydraulique, ainsi que dans les moteurs de frein à disque, à commande hydraulique ou à coin.

## Revendications

1. Moteur de frein à réglage automatique (42) du type comprenant un système à vis-écrou (32, 34) dont l'allongement est commandé par un dispositif à rochet (44) et cliquet (46) sensible au déplacement axial relatif entre un piston de commande (24) et un corps fixe (20) recevant le piston (24), le cliquet (46) étant associé au piston (24) au moyen d'un pivot (48) formant rotule (56) solidaire du piston (24), par l'intermédiaire d'un perçage (49) caractérisé en ce que l'écrou (32) comporte une gorge (60) définissant un volume annulaire dans lequel est introduite au moins une bille (64) pour interdire l'extraction de l'écrou (32) hors du piston (24) lors des opérations d'entretien du moteur de frein.

2. Moteur de frein selon la revendication 1, caractérisé en ce que la gorge (60) est formée sur l'écrou (32) au droit du perçage (49) prévu pour le montage du pivot (48) lorsque le moteur de frein est assemblé.

3. Moteur de frein selon la revendication 2, caractérisé en ce qu'au moins une bille (64) est introduite dans la gorge (60) formée sur l'écrou par le perçage (49) avant le montage du pivot (48) dans le perçage (49).

4. Moteur de frein selon la revendication 3, caractérisé en ce qu'une gorge (60') est formée à l'intérieur d'un alésage du piston (24) recevant le système à vis-écrou (32, 34) au droit du perçage (49) pour le montage du pivot (48).

5. Moteur de frein selon la revendication 4, caractérisé en ce qu'au moins une bille (64) est introduite dans un volume annulaire délimité par les gorges (60, 60′) formées sur l'écrou (32) et le piston (24).

6. Moteur de frein selon la revendication 5, caractérisé en ce qu'une extrémité du pivot (48) pénètre dans le volume annulaire délimité par les gorges (60, 60′) formées sur l'écrou (32) et le piston (24).

7. Moteur de frein selon l'une quelconque des revendications précédentes, caractérisé en ce que le pivot (48) comporte un perçage (70).

## Claims

1. Automatically adjusted brake motor (42) of the type comprising a screw-nut system (32, 34) whose extension is controlled by a ratchet (44) and pawl (46) device sensitive to the relative axial movement between an operating piston (24) and a fixed body (20) receiving the piston (24), the pawl (46) being joined to the piston (24) through a pivot (48) forming a ball and socket joint (56) solidly attached to the piston (24), via a bore (49), characterized in that the nut (32) possesses a groove (60) defining an annular volume into which at least one ball (64) is introduced, to prevent the extraction of the nut (32) from the piston (24) during maintenance operations on the brake motor.

2. Brake motor according to Claim 1, characterized in that the groove (60) is formed on the nut (32) to the right of the bore (49) intended for mounting the pivot (48) when the brake motor is assembled.

3. Brake motor according to Claim 2, characterized in that at least one ball (64) is introduced in the groove (60) formed on the nut by the bore (49) before assembling the pivot (48) in the bore (49).

4. Brake motor according to Claim 3, characterized in that a groove (60') is formed inside a bore of the piston (24) receiving the screw-nut system (32, 34) to the right of the bore (49) for mounting the pivot (48).

5. Brake motor according to Claim 4, characterized in that at least one ball (64) is introduced into an annular volume delimited by the grooves (60, 60'), formed on the nut (32) and the piston (24).

6. Brake motor according to Claim 5, characterized in that one end of the pivot (48) penetrates into the annular volume delimited by the grooves (60, 60') formed on the nut (32) and the piston (24).

7. Brake motor according to any of the previous claims, characterized in that the pivot (48) possesses a bore (70).

## Patentansprüche

1. Selbstnachstellende Bremsbetätigungsvorrichtung (42), die ein Schraube-Mutter-System (32, 34) enthält, dessen Längenzunahme von einer ein Sperrad (44) und eine Sperrklinke (46) enthaltenden Vorrichtung gesteuert wird, die auf eine relative Axialverstellung zwischen einem Steuerkolben (24) und einem feststehenden, den Kolben (24) aufnehmenden Körper (20) anspricht, wobei die Sperrklinke (46) dem Kolben (24) über einen ein Kugelgelenk (56) bildenden Gelenkzapfen (48) zugeordnet ist, der über eine Bohrung (49) fest mit dem Kolben (24) verbunden ist, dadurch gekennzeichnet, daß die Mutter (32) eine Nut (60) aufweist, die ein ringförmiges Volumen bildet, in das wenigstens eine Kugel (64) eingebracht ist, um das Herausziehen der Mutter (32) aus dem Kolben (24) bei Wartungsarbeiten des Bremsmotors zu verhindern.

2. Bremsbetätigungsvorrichtung nach Anspruch 1, dadurch gekennzeichnet, daß die Nut (60), wenn die Bremsbetätigungsvorrichtung zusammengebaut ist, auf der Mutter (32) gegenüber der zur Montage des Gelenkzapfens (48) vorgesehenen Bohrung (49) gebildet ist.

3. Bremsbetätigungsvorrichtung nach Anspruch 2, dadurch gekennzeichnet, daß in die auf der Mutter gebildete Nut (60) wenigstens eine Kugel (64) durch die Bohrung (49) vor der Montage des Gelenkzapfens (48) in der Bohrung (49) eingebracht ist.

4. Bremsbetätigungsvorrichtung nach Anspruch 3, dadurch gekennzeichnet, daß im Inneren einer das Schraube-Mutter-System (32, 34) aufnehmenden Bohrung des Kolbens (24) gegenüber der Bohrung (49) zur Montage des Gelenkzapfens (48) eine Nut (60') gebildet ist.

5. Bremsbetätigungsvorrichtung nach Anspruch 4, dadurch gekennzeichnet, daß wenigstens eine Kugel (64) in ein ringförmiges Volumen eingebracht ist, das von den auf der Mutter (32) und dem Kolben (24) gebildeten Nuten (60, 60') abgegrenzt ist.

6. Bremsbetätigungsvorrichtung nach Anspruch 5, dadurch gekennzeichnet, daß ein Ende des Gelenkzapfens (48) in das ringförmige Volumen eindringt, das von den auf der Mutter (32) und dem Kolben (24) gebildeten Nuten (60, 60') abgegrenzt ist.

7. Bremsbetätigungsvorrichtung nach einem der vorangehenden Ansprüche, dadurch gekennzeichnet, daß der Gelenkzapfen (48) eine Bohrung (70) aufweist.
